# EUROPÄISCHE PATENTSCHRIFT

(11) **EP 0 398 009 B1**
(45) Veröffentlichungstag und Bekanntmachung des Hinweises auf die Patenterteilung: **16.06.1993**
(21) Anmeldenummer: 90106486.5
(22) Anmeldetag: 05.04.1990
(51) Int. Cl.: B60G 17/056

(54) **Eingangsseitig über eine Steuerleitung mit einem Niveauregelventil verbindbares sowie auch elektrisch ansteuerbares Schaltventil**
Commuting valve which can be connected to a level control valve through a control fluid input port or controlled electrically
Soupape de commutation pouvant être reliée à une soupape de régulation de niveau par un branchement de fluide de commande ou commandée électriquement

(30) Priorität: 16.05.1989 DE 3915827
(43) Veröffentlichungstag der Anmeldung: 22.11.1990
(73) Patentinhaber: GRAU GMBH, D-69123 Heidelberg (DE)
(72) Erfinder: Blanz, Roland, D-6901 Heiligkreuzsteinach (DE)
(74) Vertreter: Rehberg, Elmar, Dipl.-Ing.

(56) Entgegenhaltungen:
- DE-C- 3 344 022
- LU-A- 57 491

## Beschreibung

Die Erfindung bezieht sich auf ein Schaltventil mit den im Oberbegriff des Patentanspruchs 1 angegebenen Merkmalen. Bei diesem Schaltventil handelt es sich um ein solches Ventil, welches zum willkürlichen Heben und Senken des Fahrzeugaufbaus eingesetzt ist und in einer Anlage Anwendung findet, in welcher auch ein Niveauregelventil zum selbsttätigen Konstanthalten der Höhe des Fahrgestells eines Fahrzeugs während der Fahrt sowie bei Be- und Entladevorgängen vorgesehen ist.

Ein Schaltventil der eingangs beschriebenen Art ist innerhalb einer Steueranlage aus der DE-PS 33 44 022 bekannt. Das Schaltventil ist zweikreisig ausgebildet. Über zwei Schaltkolben und zwei vorgeschaltete Magnetventile ist ein einziger Schieber in dem Gehäuse verschiebbar angeordnet, der einen Doppelventilkörper betätigt, der im Bereich des den Magnetventilen abgekehrten Endes des Gehäuses untergebracht ist. Bei dieser zweikreisigen Ausbildung des Schaltventils entsteht eine relativ große Baulänge.

Ein ähnliches Schaltventil ist auch aus der DE-PS 34 24 670 bekannt. Auch dieses Schaltventil ist zweikreisig ausgebildet, jedenfalls was die Stellung Fahrt anbetrifft, indem jeder Kreis über je ein Niveauregelventil gesteuert wird. Auch hier sind die von den Niveauregelventilen herangeführten Steuerleitungen radial am Gehäuse des Schaltventils, also radial zu der Achse der Schieber und Schaltkolben, vorgesehen.

In nachteiliger Weise erfordern die bekannten Schaltventile bei ein- und zweikreisiger Ausbildung jeweils unterschiedlich gestaltete Einzelteile, insbesondere Schieber. Dies verteuert nicht nur die Herstellung, sondern setzt für eine ordnungsgemäße Funktion und einen ebensolchen Einbau nach Inspektion oder Reparatur voraus, daß die unterschiedlich gestalteten Schieber nicht vertauscht eingebaut werden dürfen. Ein Baukastenprinzip für ein- bzw. mehrkreisige Ausbildung läßt sich damit nicht verwirklichen.

Der Erfindung liegt die Aufgabe zugrunde, ein Schaltventil der eingangs beschriebenen Art nach dem Baukastenprinzip auszugestalten, bei dem unabhängig von einer ein- oder mehrkreisigen Ausbildung gleiche funktionsbestimmende Bauteile eingesetzt werden. Damit soll sowohl die Herstellung der Einzelteile, ihre Anwendung sowie der Austausch zu Zwecken der Wartung und Reparatur verbessert werden.

Erfindungsgemäß wird dies dadurch erreicht, daß die vom Niveauregelventil herangeführte Steuerleitung an die Durchgangsbohrung des Doppelventilkörpers angeschlossen ist, daß der Vorratsanschluß für die Druckluftquelle und der Anschlußstutzen für die Verbindung zu den Luftfederbälgen zwischen der angeschlossenen Steuerleitung und den Auslaß angeordnet sind, und daß der Schieber in den Stellungen Heben, Senken, Fahrt und Stop abgedichtet in die Durchgangsbohrung des Doppelventilkörpers eingreift und die Verbindung zum Niveauregelventil unterbricht.

Der Doppelventilkörper mit der Durchgangsbohrung trägt also nicht mehr den Auslaß, wodurch es in vorteilhafter Weise möglich wird, die Entlüftung an anderer Stelle anzuordnen. Durch den hohlen Doppelventilkörper ist vielmehr die Steuerleitung, die von dem Niveauregelventil herangeführt ist, hindurchgeführt. Diese stirnseitige bzw. endseitige Anordnung der Steuerleitung, die natürlich auch radial mit Umlenkung verwirklicht sein kann, ist somit grundsätzlich an dem Ende des Gehäuses vorgesehen, welches den Schaltkolben und den beiden Magnetventilen abgekehrt ist. Damit wird die Grundlage für das Baukastenprinzip gelegt.

Auch bei mehrkreisiger Ausbildung und Anordnung wird das Schaltventil damit nicht länger. Jedem Kreis ist ein Schieber mit Doppelventilkörper und zwei Schaltkolben zugeordnet, so daß hierdurch die jeweilige Baueinheit geschaffen ist, die auch mehrfach mit parallelen Achsen zueinander bei mehrkreisiger Anordnung angewendet werden kann.

Gleichzeitig tritt bei der mehrkreisigen Ausbildung durch die Verwirklichung dieses Baukastenprinzips der Vorteil auf, daß sich die freien Querschnitte der Einlaßventile und der Auslaßventile im Vergleich zur einkreisigen Ausführungsform vergrößern, bei zweikreisiger Ausführung also verdoppeln. Dies bedeutet in etwa gleich lange, absolut gesehen, relativ kurze Be- und Entlüftungszeiten, unabhängig von ein- oder zweikreisiger Ausbildung.

Der Doppelventilkörper kann in einem in das Gehäuse stirnseitig dichtend einschraubbaren Einsatz dichtend geführt sein, der einen Anschlußstutzen für die vom Niveauregelventil herangeführte Steuerleitung aufweist. Die Anwendung eines solchen Einsatzes erbringt den Vorteil einer leichten Montagemöglichkeit und einer erleichterten Austauschmöglichkeit für den Doppelventilkörper. Andererseits kann der Anschlußstutzen für die vom Niveauregelventil herangeführte Steuerleitung an dem Einsatz selbst verwirklicht werden, so daß der Doppelventilkörper in seiner feinfühligen Bewegungsmöglichkeit durch den Anschluß der Steuerleitung nicht behindert wird.

Der Auslaß kann mit den Rückräumen der Schaltkolben in Verbindung stehen, so daß letztendlich nur ein aus dem Gehäuse in die Atmosphäre herausführender Entlüftungsanschluß vorgesehen sein muß. Dies ist dadurch möglich, daß die verschiedenen Anschlüsse in der beanspruchten Reihenfolge vorgesehen sind, die ausgehend von dem stirnseitigen Ende mit dem Anschluß für die Steuerleitung vom Niveauregelventil her beginnt und am Auslaß in die Atmosphäre endet, wobei die Anschlußstutzen für die Vorratsluft und die Luftfederbälge in der einen oder anderen Anordnungsreihenfolge zwischen diesen beiden Anschlüssen vorgesehen sein können.

Der hohl ausgebildete Doppelventilkörper kann eine zylindrische Sitzfläche und im Anschluß daran einen Anschlag aufweisen; auch dabei ist der Schieber in die Sitzfläche des Doppelventilkörpers unter Bildung des Absperrventils einfahrbar ausgebildet. Durch diese Ausgestaltung sind neben dem Gehäuse nur noch zwei relativ zum Gehäuse sowie relativ zueinander bewegliche Teile vorgesehen, nämlich der Schieber einerseits und der Doppelventilkörper andererseits. Die Anzahl der beweglichen Teile gegenüber dem gattungsgemäßen Schaltventil ist damit vorteilhaft verkleinert, ohne daß eine Funktionseinbuße eintritt. Der Doppelventilkörper ist somit nicht nur Bestandteil des Einlaßventils, sondern zugleich auch des Absperrventils. Der Schieber bildet einen Bestandteil aller drei genannten Ventile.

Dabei kann die zylindrische Sitzfläche des Doppelventilkörpers über ihre Länge konstanten Durchmesser aufweisen. Bei geöffnetem Absperrventil ist dann der Schieber aus der Sitzfläche des Doppelventilkörpers herausgefahren. Es stellt dies die oberste Stellung der beiden Schaltkolben dar, wobei dieser stromlosen Stellung der Magnetventile vorteilhaft die Stellung Fahrt zugeordnet ist.

Andererseits besteht die Möglichkeit, die zylindrische Sitzfläche des Doppelventilkörpers von einer Erweiterung zu unterbrechen, die der geöffneten Stellung des Absperrventils zugeordnet ist. Dabei bewegt sich in allen Fällen das vordere Ende des Schiebers nur noch in dem hohlen Doppelventilkörper, und der obersten Stellung der beiden Schaltkolben kann vorteilhaft bei stromlosen Magnetventilen die Stellung Stop zugeordnet sein.

In den beiden aufgezeigten Fällen ist der Schieber und die Ausbildung und Anordnung der verschiedenen Dichtungen auf dem Schieber etwas unterschiedlich gestaltet. In beiden Fällen ergibt sich jedoch etwa gleiche Baulänge. Die Stellungen Heben und Senken sind den beiden am meisten ausgefahrenen Stellungen der beiden Schaltkolben zugeordnet.

Durch das Baukastenprinzip besteht die Möglichkeit, für eine zwei- oder mehrkreisige Ausbildung innerhalb einer Anlage das einkreisige Schaltventil zwei- oder mehrfach anzuwenden. Eine andere Möglichkeit besteht darin, die wesentlichen Einzelteile des Schaltventils nach der einkreisigen Anordnung mehrfach parallel nebeneinander in einem gesonderten, für die zwei- oder mehrkreisige Ausbildung geschaffenen Gehäuse unterzubringen. Dabei werden dann insbesondere, bezogen auf jeden Kreis, gleiche Teile eingesetzt, zweckmäßig mit Ausnahme der Magnetventile, die auch bei mehrkreisiger Ausführung nur einfach vorgesehen sein müssen. Zu Zwecken der Wartung und/oder Reparatur können dann die Einzelteile jeweils ausgetauscht werden, ohne daß die Gefahr besteht, daß die falschen Teile an der jeweiligen Stellung eingebaut werden. Dabei können bei zweikreisiger Ausbildung auch jedem Schieber zwei separate Schaltkolben zugeordnet sein. Die Schaltkolben sämtlicher Kreise können über nur zwei Magnetventile ansteuerbar sein.

Bevorzugte Ausführungsbeispiele des erfindungsgemäßen Schaltventils sind in den Zeichnungen dargestellt und werden im Folgenden beschrieben. Es zeigt
**Fig.** 1 einen Schnitt durch ein einkreisig ausgebildetes Schaltventil in einer ersten Ausführungsform,
**Fig.** 2 einen Schnitt durch ein zweikreisig ausgebildetes Schaltventil, bei dem mit Ausnahme des Gehäuses die gleichen Einzelteile doppelt eingesetzt sind wie bei der einkreisigen Ausführungsform der **Fig.** 1 und
**Fig.** 3 eine zweite Ausführungsform eines zweikreisig ausgebildeten Schaltventils mit entsprechend doppelter Anordnung der Einzelteile.

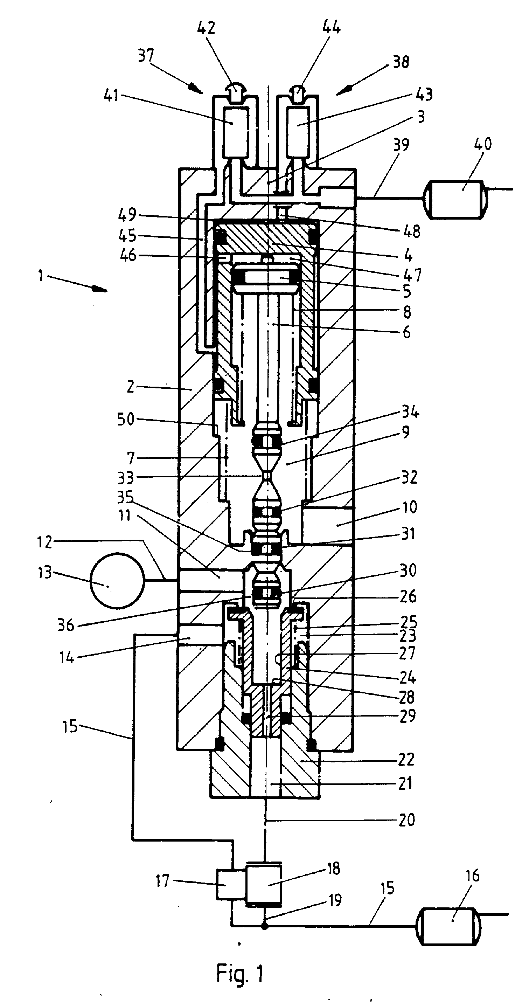

Das in **Fig.** 1 dargestellte Schaltventil **1** ist einkreisig ausgebildet und weist ein Gehäuse **2** auf, welches zweckmäßig geteilt ausgebildet ist. In fluchtender Anordnung zu einer Achse **3** sind zwei Schaltkolben **4** und **5** in der dargestellten Weise dichtend und verschieblich gelagert, von denen der Schaltkolben **5** mit einem Schieber **6** versehen oder verbunden ist. Die Schaltkolben **4** und **5** sind auf Rückführfedern **7** bzw. **8** abgestützt, die in einem gemeinsamen Rückraum **9** angeordnet sind. An diesem Rückraum **9** ist ein Auslaß **10** angeschlossen, der in die Atmosphäre führt.

In Richtung auf das den Schaltkolben **4** und **5** abgekehrte Ende des Gehäuses **1** sind in radialer Richtung nach dem Auslaß **10** ein Anschlußstutzen **11** für den Anschluß einer Leitung **12** vorgesehen, die zu einem oder mehreren Luftfederbälgen **13** führt. In der Reihenfolge nachfolgend ist ein Vorratsanschluß **14** am Gehäuse **1** vorgesehen, an den eine Vorratsleitung **15** von einer Druckluftquelle zweckmäßig über einen Druckluftvorratsbehälter **16** herangeführt ist. Die Vorratsleitung **15** kann über einen Höhenbegrenzungsteil **17** eines Niveauregelventils **18** geführt sein.

Das Niveauregelventil **18** wird über eine Leitung **19**, die von der Vorratsleitung **15** nach dem Druckluftvorratsbehälter **16** abzweigt, versorgt. An dem den Schaltkolben **4** und **5** im Gehäuse gegenüberliegenden stirnseitigen Ende ist eine Steuerleitung **20** an einen Anschlußstutzen **21** angeschlossen. Der Anschlußstutzen **21** ist hier Bestandteil eines Einsatzes **22**, der dichtend in das Gehäuse **2** eingeschraubt ist.

Die Öffnung des Anschlußstutzens **21** erstreckt sich hier in Richtung der Achse **3**, kann aber ebenso gut auch radial zu der Achse **3** in dem Einsatz **22** verwirklicht sein.

Die Steuerleitung **20** ist von dem Niveauregelventil **18** an das Schaltventil **1** herangeführt. In einer zwischen Gehäuse **2** und Einsatz **22** gebildeten Vorratskammer **23** ist ein Doppelventilkörper **24** dichtend und verschiebbar gelagert sowie auf einer Feder **25** abgestützt. Der Doppelventilkörper **24** bildet mit einem gehäuseseitigen, vorspringenden Rand **26** ein Einlaßventil **24**, **26**. Er begrenzt im Gehäuse die Vorratskammer **23**, die in dauernder Verbindung mit dem Vorratsanschluß **14** steht. Der Doppelventilkörper **24** in seinem Innern hohl ausgebildet. Er besitzt, ausgehend von seinem dem Einlaßventil **24**, **26** zugekehrten Ende eine zylindrische Sitzfläche **27**, die in einen Anschlag **28** übergeht und sich in einer Durchbrechung **29** fortsetzt, die zu dem Anschlußstutzen **21** führt.

Auf dem Schieber **6** sind hintereinander drei Dichtungen **30**, **31**, **32**, eine Verjüngung **33** und nochmals eine Dichtung **34** angeordnet, die mit Ausnahme der Verjüngung **33** alle gleichen Durchmesser aufweisen und je nach Stellung einerseits mit einer entsprechend angepaßten zylindrischen Bohrung **35** und mit der Sitzfläche **27** zusammenarbeiten. Die Bohrung **35** bildet die Sitzfläche eines Auslaßventils **31**, **35** bzw. **32**, **35** bzw. **34**, **35** je nach Stellung des Schiebers **6**. Die Dichtung **30** bildet mit der Sitzläche **27** ein Absperrventil **27**, **30**. Der Schieber **6** durchdringt im Gehäuse **2** eine Kammer **36**, die in dauernder Verbindung zu dem Anschlußstutzen **11** und damit den Luftfederbälgen **13** steht.

An dem Ende des Gehäuses **2**, in welchem die Schaltkolben **4** und **5** angeordnet sind, sind auch zwei Magnetventile **37** und **38** vorgesehen, die über eine Leitung **39** mit Druckluft aus einem Druckluftvorratsbehälter **40** versorgt werden, der auch der Druckluftvorratsbehälter **16** sein kann oder an diesen angeschlossen ist. Das Magnetventil **37** weist einen Kern **41** und eine Entlüftung **42** auf. Das Magnetventil **38** besitzt einen Kern **43** und eine Entlüftung **44**. Von dem Magnetventil **37** führt eine Steuerleitung **45** über eine Bohrung **46** in eine Schaltkammer **47** zwischen den beiden Schaltkolben **4** und **5**. Andererseits führt von dem Magnetventil **38** eine Steuerleitung **48** zu einer Schaltkammer **49**, die dem Schaltkolben **4** zugeordnet ist.

In **Fig.** 1 ist die stromlose Stellung der Magnetventile **37** und **38** dargestellt, die der Stellung Fahrt des Schaltventils **1** zugeordnet ist. Wie ersichtlich, sind die Steuerleitungen **45** und **48** drucklos bzw. über die Entlüftungen **42** und **44** an die Atmosphäre angeschlossen. Demzufolge befinden sich die beiden Schaltkolben **4** und **5** infolge der Kraft der Rückführfedern **7** und **8** in ihrer obersten Stellung, wobei auch der Schieber **6** infolge der Mitnahme durch den Schaltkolben **5** seine oberste Stellung einnimmt. Dabei ist das Auslaßventil **31**, **35** geschlossen. Auch das Einlaßventil **24**, **26** ist geschlossen.

Das Absperrventil **27**, **30** ist geöffnet, so daß über die Steuerleitung **20** der entsprechende Druck von dem Niveauregelventil **18** in der Stellung Fahrt in die Luftfederbälge **13** ausgesteuert wird. Es versteht sich, daß mit diesem Niveauregelventil **18** unabhängig von dem Beladungszustand eine gewünschte, eingestellte Aufbauhöhe gegenüber dem Fahrgestell eingehalten wird.

Die Magnetventile **37** und **38** sind über eine nicht dargestellte elektrische oder elektronische Steuereinrichtungen in die drei verbleibenden Stellungen Stop, Senken und Heben willkürlich steuerbar. In der Stellung Stop wird das Magnetventil **38** erregt, während das Magnetventil **37** unerregt bleibt. Demzufolge verschließt der Kern **43** die Entlüftung **44**, und die Schaltkammer **49** über dem Schaltkolben **4** wird mit Druckluft aus dem Druckluftvorratsbehälter **40** beaufschlagt, so daß beide Schaltkolben **4** und **5** einen ersten Hub, der durch einen Anschlag **50** am Gehäuse **2** begrenzt wird, zurücklegen.

Dieser Hub führt dazu, daß der Schieber **6** mit seiner Dichtung **30** in die Sitzfläche **27** einfährt, so daß das Absperrventil **27**, **30** schließt. Damit ist das Niveauregelventil **18** von den Luftfederbälgen **13** getrennt und abgeschlossen. Gleichzeitig fährt die Dichtung **32** in die Bohrung **35** ein, so daß das Auslaßventil nach wie vor geschlossen bleibt. Auch das Einlaßventil **24**, **26** verbleibt geschlossen, so daß sämtliche Leitungsverbindungen gegeneinander abgesperrt sind. Lediglich der gemeinsame Rückraum **9** der Schaltkolben **4** und **5** ist über den Auslaß **10** an die Atmosphäre angeschlossen.

Zum Erreichen der Stellung Senken wird das Magnetventil **37** erregt, während das Magnetventil **38** in die nicht-erregte Stellung überführt wird oder in dieser Stellung verbleibt. Damit wird lediglich die Schaltkammer **47** mit Druckluft beaufschlagt, so daß die Dichtung **30** des Absperrventils noch weiter in die Sitzfläche **27** einfährt, ohne daß allerdings das vordere Ende des Schiebers **6** bereits den Anschlag **28** erreicht. Das Absperrventil **27**, **30** bleibt somit weiterhin geschlossen. Auch das Einlaßventil **24**, **26** bleibt geschlossen. Dagegen öffnet das Auslaßventil, indem die Verjüngung **33** in den Bereich der Bohrung **35** einfährt, so daß Druckluft aus den Luftfederbälgen **13** über die Leitung **12**, den Anschlußstutzen **11**, die Kammer **36** und die Verjüngung **33** in den Rückraum **9** und von dort über den Auslaß **10** in die Atmosphäre strömen kann. Der Fahrzeugaufbau wird somit abgesenkt.

Zum willkürlichen Heben des Fahrzeugaufbaus relativ zum Fahrgestell werden beide Magnetventile **37** und **38** erregt, so daß die beiden Schaltkolben **4** und **5** in ihren Schaltkammern **47** und **49** mit Druckluft beaufschlagt werden und der Schieber **6** den sich aus der Summe der beiden Einzelhübe ergebenden Hub zurücklegt. Dabei trifft das vordere Ende des Schiebers **6** auf den Anschlag **28** auf und in Fortsetzung dieses Wegs wird das Einlaßventil **24**, **26** geöffnet. Vorher ist die Dichtung **34** in den Bereich der Bohrung **35** eingefahren, so daß das Auslaßventil **34**, **35** geschlossen wurde. Das Absperrventil **27**, **30** ist nach wie vor geschlossen.

Damit strömt Druckluft aus dem Druckluftvorratsbehälter **16** über die Leitung **15**, den Vorratsanschluß **14**, die Vorratskammer **23** und das geöffnete Einlaßventil **24**, **26** in die Kammer **36** und von dort über den Anschlußstutzen **11** und die Leitung **12** in die Luftfederbälge **13**, so daß der Fahrzeugaufbau gegenüber dem Fahrgestell angehoben wird. Dieses Anheben dauert solange wie die beiden Magnetventile **37** und **38** erregt bleiben.

Als Sicherheit schaltet der Höhenbegrenzungsteil **17** des Niveauregelventils **18** die weitere Druckluftzufuhr ab, wenn die maximale Höhe, die nicht überschritten werden soll, erreicht ist. Andererseits kann aber durch Beendigung des entsprechenden Schaltvorgangs eine innerhalb dieses Rahmens vorgesehene gewünschte willkürliche Höhe durch Heben angesteuert werden.

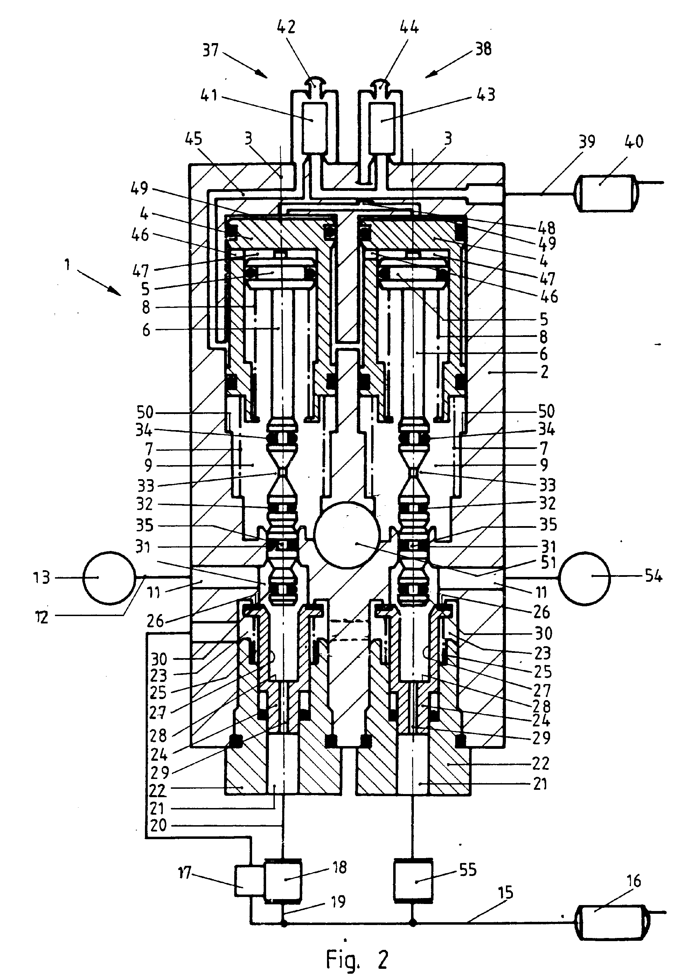

Wesentlich ist die Ausbildung der einzelnen Teile des Schaltventils nach dem Baukastenprinzip. Für jeden Kreis sind im wesentlichen identische Teile vorgesehen, was durch Vergleich mit dem zweikreisig ausgebildeten Schaltventil gemäß **Fig.** 2 leicht erkennbar wird. Bei gleicher Ausführungsform sind ansonsten sämtliche Einzelteile, mit Ausnahme des Gehäuses **2** und der Magnetventile **37** und **38** im Gehäuse **2** doppelt vorgesehen. Es genügt, eines der beiden Niveauregelventile **18** mit einem Höhenbegrenzungsteil **17** auszurüsten. Es ist auch möglich, einen gemeinsamen Auslaß **51** für die beiden Kreise vorzusehen und diesen beispielsweise mit doppeltem Querschnitt auszubilden gegenüber der Anordnung und dem Querschnitt des Auslasses **10** der **Fig.** 1. Somit erhält man nur eine Öffnung des Gehäuses **2** nach außen. Es ist aber natürlich auch möglich, zwei voneinander getrennte Auslässe **10** vorzusehen.

Es wird besonders darauf hingewiesen, daß hier auch die Schaltkolben **4** und **5** für jeden Kreis je einmal, also insgesamt doppelt, vorgesehen sind. Durch diese Ausbildungsmöglichkeit anstelle von gemeinsamen Schaltkolben bekommt das Gehäuse **2** des Schaltventils **1** einen vorteilhaft flachen, im wesentlichen rechteckigen Querschnitt, so daß die Baugröße diesbezüglich verkleinert ist. Von besonderer Bedeutung jedoch ist, daß für jeden Kreis ein gesondertes Einlaßventil **24**, **26** vorgesehen ist, so daß sich bei gleicher absoluter Baugröße gegenüber dem einkreisigen Schaltventil der **Fig.** 1 der doppelte Einströmquerschnitt beim Heben ergibt. Durch die entsprechende Gestaltung des gemeinsamen Auslasses **51** kann auch der doppelte Ausströmquerschnitt beim Senken vorgesehen sein.

Da auch das Absperrventil **27**, **30** und die entsprechenden Durchgänge doppelt vorgesehen sind, besitzt auch das Absperrventil **27**, **30** bei der zweikreisigen Ausbildung im Vergleich zur einkreisigen Ausbildung doppelt so große Durchtrittsquerschnitte. Die Betätigungszeiten, die für die Be- und Entlüftung erforderlich sind, verlängern sich damit auch bei mehrkreisiger Ausbildung nicht, wenn entsprechend übereinstimmende Luftvolumina der Luftfederbälge **13** unterstellt werden.

Es versteht sich, daß auch bei dem Ausführungsbeispiel der **Fig.** 2 nacheinander die vier Stellungen Fahrt, Stop, Senken, Heben einsteuerbar sind, wie dies am Ausführungsbeispiel der **Fig.** 1 bereits beschrieben wurde. Somit ist auch der zweikreisigen Ausbildung gemäß **Fig.** 2 in stromlosen Zustand der Magnetventile **37**, **38** die Stellung Fahrt zugeordnet.

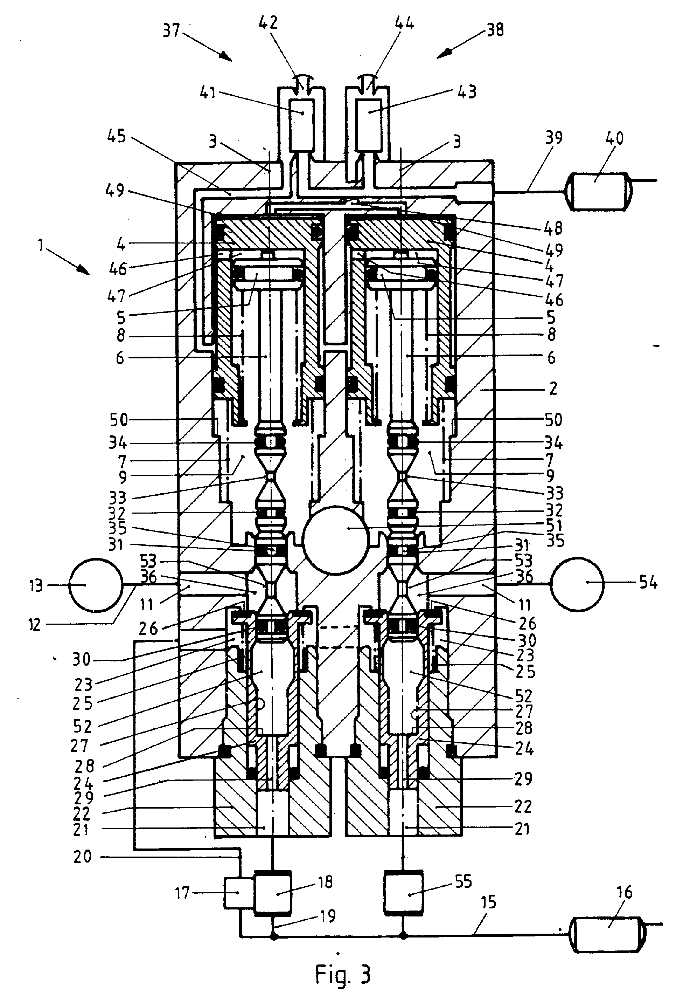

Die Ausführungsform der **Fig.** 3 zeigt ein Schaltventil **1**, welches zweikreisig ausgebildet ist. Zu diesem Zweck ist wiederum eine doppelte Anordnung der betreffenden Einzelteile mit den zueinander parallelen Achsen **3** vorgesehen. Die einkreisige Ausbilfung ist ohne weiteres ableitbar, indem die hier doppelt vorgesehenen Einzelteile nur einfach vorgesehen sind, wie dies andererseits am Ausführungsbeispiel der **Fig.** 2 gegenüber der **Fig.** 1 erkennbar ist.

Die Ausbildung im einzelnen stimmt weitgehend überein, mit folgenden Abweichungen. Die zylindrische Sitzfläche **27** ist hier von einer Erweiterung **52** im Doppelventilkörper **24** unterbrochen. Zwischen der Dichtung **30** und der Dichtung **31** auf dem Schieber **6** ist eine weitere Verjüngung **53** vorgesehen. Demzufolge sind die Stellungen Fahrt und Stop in der Reihenfolge gegenüber dem Ausführungsbeispiel der **Fig.** 1 und 2 vertauscht angeordnet, so daß der stromlosen Stellung der Magnetventile **37** und **38** hier die Stellung Stop zugeordnet ist, die auch in **Fig.** 3 dargestellt ist.

Man erkennt, daß sowohl die Einlaßventile **24**, **26**, die Absperrventile **27**, **30** und die Auslaßventile **31**, **35** geschlossen sind. Bei Erregung des Magnetventils **38** allein wird die Stellung Fahrt erreicht, indem die Dichtung **30** in den Bereich der Erweiterung **52** einfährt und die Verjüngung **53** dem einen Teil der Sitzfläche **27** gegenübersteht, so daß die Luftfederbälge **13** und **54** der beiden Kreise über die beiden Niveauregelventile **18** und **55** entsprechend ansteuerbar sind. Diesen beiden Stellungen schließen sich dann wie auch bei den Ausführungsbeispielen der **Fig.** 1 und 2 die Stellungen Senken und Heben an.

## Patentansprüche

1. Eingangsseitig über eine Steuerleitung (20) mit einem Niveauregelventil (18) verbindbares sowie auch elektrisch ansteuerbares Schaltventil (1) mit den Stellungen Heben, Senken, Fahrt und Stop, das an einem Gehäuse (2) weiter einen Vorratsanschluß (14) für eine Druckluftquelle, einen Auslaß (10) und mindestens einen Anschlußstutzen (11) für die Verbindung zu Luftfederbälgen (13) aufweist, wobei im Gehäuse ein Schieber (6) und ein von diesem betätigbarer, am Gehäuseende angeordneter und das Einlaßventil (24, 26) schaltender Doppelventilkörper (24) mit einer Durchgangsbohrung über zwei Schaltkolben (4, 5) und zwei diesen vorgeschaltete Magnetventile (37, 38) in die vier Stellungen schaltbar sind und dabei das Einlaßventil, ein Auslaßventil (31, 35 bzw. 32, 35 bzw. 34, 35) und ein Absperrventil (27, 30) für die Verbindung bzw. Trennung der Leitungsführungen in den vier Stellungen gebildet sind, **dadurch gekennzeichnet**, daß die vom Niveauregelventil (**18**) herangeführte Steuerleitung (**20**) an die Durchgangsbohrung des Doppelventilkörpers (**24**) angeschlossen ist, daß der Vorratsanschluß (**14**) für die Druckluftquelle und der Anschlußstutzen (**11**) für die Verbindung zu den Luftfederbälgen (**13**) zwischen der angeschlossenen Steuerleitung (**20**) und dem Auslaß (**10**; **51**) angeordnet sind, und daß der Schieber in den Stellungen Heben, Senken und Stop abgedichtet in die Durchgangsbohrung des Doppelventilkörpers (**24**) eingreift und die Verbindung zum Niveauregelventil (**18**) unterbricht.

2. Schaltventil nach Anspruch 1, dadurch gekennzeichnet, daß der Doppelventilkörper (**24**) in einem in das Gehäuse (**2**) stirnseitig dichtend einschraubbaren Einsatz (**22**) dichtend geführt ist, der einen Anschlußstutzen (**21**) für die vom Niveauregelventil (**18**) herangeführte Steuerleitung (**20**) aufweist.

3. Schaltventil nach Anspruch 1 oder 2, dadurch gekennzeichnet, daß der Auslaß (**10**; **51**) mit Rückräumen (**9**) der Schaltkolben (**4**; **5**) in Verbindung steht.

4. Schaltventil nach Anspruch 1 oder 2, dadurch gekennzeichnet, daß der hohle Doppelventilkörper (**24**) eine zylindrische Sitzfläche (**27**) und im Anschluß daran einen Anschlag (**28**) aufweist.

5. Schaltventil nach Anspruch 4, dadurch gekennzeichnet, daß die zylindrische Sitzfläche (**27**) des Doppelventilkörpers (**24**) über ihre Länge konstanten Durchmesser aufweist.

6. Schaltventil nach Anspruch 4, dadurch gekennzeichnet, daß die zylindrische Sitzfläche (**27**) des Doppelventilkörpers (**24**) von einer Erweiterung (**52**) unterbrochen ist.

7. Schaltventil nach Anspruch 1, dadurch gekennzeichnet, daß bei zweikreisiger Ausbildung jedem Schieber (**6**) zwei separate Schaltkolben (**4**; **5**) zugeordnet sind.

8. Schaltventil nach Anspruch 7, dadurch gekennzeichnet, daß die Schaltkolben (**4**; **5**) sämtlicher Kreise über nur zwei Magnetventile (**37**; **38**) ansteuerbar sind.

## Claims

1. Pilot valve (1) which can be connected via a control line (20) to a levelling valve (18) on the input side or which can be controlled electrically, having the positions raise, lower, travel and stop and also having a reservoir connection (14) for a compressed air source on a housing (2), an exhaust (10) and at least one connection nozzle (11) for the connnection to pneumatic spring bellows (13), whereby a slider (6) in the housing and a two-way valve body (24) actuated by said slider, located on the end of the housing and operating the inlet valve (24, 26) and with a through-bore via two operating pistons (4, 5) and two solenoid valves (37, 38) downstream of said pistons, can be switched in the four positions and thereby the inlet valve, an exhaust valve (31, 35 respectively 32, 35 respectively 34, 35) and a shut-off valve (27, 30) are formed for the connection or disconnection respectively of the line arrangements in the four positions, **characterized in that** the control line (20) feeding from the levelling valve (18) is connected to the valve opening of the two-way valve body (24), that the reservoir connection (14) for the compressed air source and the connection nozzle (11) for the connnection to the pneumatic spring bellows (13) are located between the connected control line (20) and the exhaust (10; 51), and that the slider sealingly engages in the through-bore of the two-way valve body (24) in the positions raise, lower and stop and interrupts the connection to the levelling valve (18).

2. Pilot valve according to claim 1, **characterized in that** the two-way valve body (24) is guided and sealed into an insert (22) which is screwed and sealed into the front of the housing (2) and which has a connection nozzle (21) for the control line (20) feeding from the levelling valve (18).

3. Pilot valve according to claim 1 or 2, **characterized in that** the exhaust (10; 51) is connected to the rear chambers of the operating pistons (4; 5).

4. Pilot valve according to claim 1 or 2, **characterized in that** the hollow two-way valve body (24) has a cylindrical seating (27) and a subsequent stop (28).

5. Pilot valve according to claim 4, **characterized in that** the cylindrical seating (27) of the two-way valve body (24) has a constant diameter over its length.

6. Pilot valve according to claim 4, **characterized in that** the cylindrical seating (27) of the two-way valve body (24) is interrupted by an enlargement (52).

7. Pilot valve according to claim 1, **characterized in that** with a twin-circuit version, two separate operating pistons (4; 5) are allocated to each slider (6).

8. Pilot valve according to claim 4, **characterized in that** the operating pistons (4; 5) of all circuits can be triggered via only two solenoid valves (37; 38).

## Revendications

1. Vanne de distribution (1) reliée sur son côté d'entrée à une vanne régulatrice de niveau (18) par une conduite de commande (20) et pouvant aussi être commandée électriquement, avec les positions de levée, de descente, de marche et d'arrêt, présentant en outre sur un boîtier (2) un raccord d'alimentation (14) pour une source d'air comprimé, un évent (10) et au moins un raccord (11) pour la liaison avec des soufflets de suspension pneumatique (13), tandis que, dans le boîtier, un tiroir (6) et un clapet double (24) actionné par ce tiroir et disposé à l'extrémité du boîtier et commutant la soupape d'admission (24, 26), avec un alésage de passage, sont commutables dans les quatre positions au moyen de deux pistons de commutation (4, 5) et de deux électrovannes (37, 38) branchées en amont de ces pistons, en formant la soupape d'admission, une soupape d'échappement (31, 35 ou 32, 35 ou 34, 35) et une vanne d'arrêt (27, 30) pour la mise en communication ou la séparation des conduites dans les quatre positions,
**caractérisée** en ce que la conduite de commande (20) venant de la vanne régulatrice de niveau (18) est raccordée à l'alésage de passage du clapet double (24), en ce que le raccord d'alimentation (14) pour la source d'air comprimé et le raccord (11) de liaison avec les soufflets de suspension pneumatique (13) sont disposés entre la conduite de commande (20) raccordée et l'évent (10; 51), et en ce que le tiroir s'engage de manière étanche dans l'alésage de passage du clapet double (24) dans les positions de levée, de descente et d'arrêt, et interrompt la communication avec la vanne régulatrice de niveau (18).

2. Vanne de distribution selon la revendication 1, caractérisée en ce que le clapet double (24) est guidé de manière étanche dans une pièce rapportée (22) se vissant de manière étanche dans la face d'extrémité du boîtier (2) et présentant un raccord (21) pour le raccordement de la conduite de commande (20) venant de la vanne régulatrice de niveau (18).

3. Vanne de distribution selon la revendication 1 ou 2, caractérisée en ce que l'évent (10; 51) communique avec des chambres postérieures (9) des pistons de commutation (4; 5).

4. Vanne de distribution selon la revendication 1 ou 2, caractérisée en ce que le clapet double creux (24) présente une surface de siège cylindrique (27) et une butée (28) se raccordant à cette surface.

5. Vanne de distribution selon la revendication 4, caractérisée en ce que la surface de siège cylindrique (27) du clapet double (24) présente un diamètre constant sur sa longueur.

6. Vanne de distribution selon la revendication 4, caractérisée en ce que la surface de siège cylindrique (27) du clapet double (24) est interrompue par un élargissement (52).

7. Vanne de distribution selon la revendication 1, caractérisée en ce que, dans la forme de réalisation à deux circuits, deux pistons de commutation (4; 5) séparés sont associés à chaque tiroir (6).

8. Vanne de distribution selon la revendication 7, caractérisée en ce que les pistons de commutation (4; 5) de tous les circuits peuvent être commandés au moyen de seulement deux électrovannes (37; 38).
